# EUROPEAN PATENT SPECIFICATION

(11) **EP 1 736 063 B1**
(45) Date of publication and mention of the grant of the patent: **31.12.2008**
(21) Application number: 05257013.2
(22) Date of filing: 14.11.2005
(51) Int. Cl.: A23L 2/38, A23F 5/24, A23L 2/40, A23L 2/60

(54) **Coffee cola beverage composition**
Kaffee-Kolagetränk
Boisson à cola et à café

(30) Priority: 21.06.2005 US 157156
(43) Date of publication of application: 27.12.2006
(60) Divisional application: 08017453.5
(73) Proprietor: The Coca-Cola Company, Atlanta, GA 30313 (US)
(72) Inventor: Simpson, Tyler, Smyrna Georgia 30080 (US); Sepcic, Kelly, Mableton Georgia 30126 (US); Major, Charles, Decatur Georgia 30035 (US); Hays, Eddie R., Marietta Georgia 30068 (US)
(74) Representative: Towler, Philip Dean

(56) References cited:
- EP-A- 0 136 192
- US-A- 3 888 998
- US-A- 4 882 181

## Description

### BACKGROUND OF THE INVENTION

This invention relates to the field of beverages, particularly carbonated cola beverage compositions comprising soluble coffee solids.

Beverage formulators have long sought to combine the popular tastes of coffee and carbonated cola beverages into a single beverage featuring the best qualities of both. Prior attempts at producing a tasty coffee cola beverage have included mixing coffee with cola, adding coffee flavoring to cola beverages, adding coffee extract to cola beverages and adding coffee solids to cola beverages.

EP-A-136192 discloses carbonated, beverage, comprising plant extracts, sugar, coffee and cola.

Despite the popularity of coffees and colas, the strong interest in a beverage having the combined flavors of coffee and cola, and the best efforts of the beverage industry, no coffee cola beverage introduced to-date has successfully combined the elements of coffee and cola to produce a tasty, packageable beverage that has had any long term widespread success in the marketplace. In short, none of the prior art coffee cola beverages have tasted very good, and almost all of them have been discontinued.

### BRIEF SUMMARY OF THE INVENTION

It is an object of the invention to provide a coffee cola beverage that features the best qualities of coffee and cola beverages and that has a dramatically improved taste as compared to prior art coffee cola beverages. In accordance with this aspect of the invention, there is provided a newly discovered coffee cola beverage composition having a pleasant and impactful coffee aroma, smooth mouthfeel, foamy and stable head and a surprisingly delicious coffee cola flavor. This unexpectedly good taste results from the use of soluble coffee solids in the range of 0.05% w/v to 0.50% w/v added to a carbonated cola beverage.

Accordingly, it is a further object of the invention to provide a coffee cola beverage according to claim 1, having coffee solids in an amount equal or greater than 0.05% w/v, and less than or equal to 0.50% w/v. The use of soluble coffee solids outside this range, or the use of coffee flavorings, do not produce a flavor that approaches the delicious taste resulting from the use of coffee solids in the aforementioned range, nor do they otherwise indicate or suggest that such a delicious flavor would be obtained upon the use of coffee solids in this range.

The unexpectedly delicious coffee cola taste according to the invention may be provided by adding soluble coffee solids in the range of 0.05% w/v to 0.50% w/v to a fully carbonated or partially carbonated cola beverage. Therefore, it is a further object of the invention to provide a fully carbonated cola beverage to which has been added soluble coffee solids in the range of 0.05% w/v to 0.50% w/v to produce a fully carbonated coffee cola beverage. It is another object of the invention to provide a partially carbonated cola beverage to which has been added soluble coffee solids in the range of 0.05% w/v to 0/50% w/v to produce a partially carbonated coffee cola beverage.

### DETAILED DESCRIPTION OF THE INVENTION

The coffee cola beverage composition of the invention contains soluble coffee solids in the range of 0.05% w/v to 0.50% w/v, sucrose in an amount equal to or greater than 2.0% w/v and no greater than 6.0% w/v; Aspartame in an amount equal to or greater than 0.006% w/v and no greater than 0.015% w/v; and Acesulfame Potassium in an amount equal to or greater than 0.006% w/v and no greater than 0.015% w/v, added to a cola beverage, fully or partially carbonated. According to preferred embodiments of the invention, soluble coffee solids in the range of 0.14% w/v to 0.29% w/v may be used. According to a more preferred embodiment, coffee solids in the amount of 0.14% w/v may be used.

The term "coffee solids" is used herein consistent with its ordinary meaning in the art, and nothing herein is intended to limit its meaning.

The terms "cola" and "cola beverage" are likewise used herein consistent with their ordinary meanings in the art, and nothing herein is intended to limit their meanings.

The preferred form of coffee solids according to the invention is powdered coffee solids, for example of the type produced by spray drying coffee extract according to methods known in the art. However, the invention may be accomplished using, and is therefore considered to include, any source and/or type of soluble coffee solids, provided that the amount of soluble coffee solids falls within the ranges set forth herein. The use of coffee extract, in particular, is considered to fall within the scope of the invention. However, coffee extract is less preferred as a source of soluble coffee solids because of the large amounts necessary to deliver soluble coffee solids in the amounts required by the invention. High quality coffee should be used in accordance with the invention, roasted according to taste, and may include light roast coffees, medium roast coffees, deep roast coffees, and combinations thereof.

The cola characteristics of the coffee cola beverage may be obtained by the use of cola formulations known to or within the skill of persons of ordinary skill in the art. Accordingly, typical cola formulations containing caramel color, phosphoric acid, caffeine and natural flavors may be used in accordance with the invention. Similarly, standard and accepted preservatives may be used, for example potassium sorbate, sodium benzoate and or potassium benzoate as well.

The cola formulations to which the aforementioned amounts of soluble coffee solids may be added include full calorie, mid calorie and no calorie cola beverages.

The mid calorie coffee cola beverage of the invention has a composition according to claim 1.. According to a preferred embodiment of the mid calorie coffee cola beverage, sugar is used in the amount of 4.78% w/v, Aspartame is used in the amount of 0.0074% w/v and Acesulfame Potassium is used in the amount of 0.0074% w/v.

Table 1 lists the preferred ingredients of the full calorie coffee cola beverage and the ranges in which they may be present, the preferred ranges in which they may be present, and the most preferred amount in which they may be present.

**Table 1: Full Calorie Coffee Cola Beverage**

| **Ingredients** | **% w/v** **Preferred range** | **% w/v** **More Preferred range** | **% w/v** **Most preferred embodiment** |
|---|---|---|---|
| Potassium Sorbate | 0.000 - 0.050 | 0.000 - 0.032 | 0.032 |
| Sodium Benzoate | 0.000 - 0.040 | 0.000 - 0.017 | 0.017 |
| Caramel Color, Phosphoric Acid, Caffeine, Natural Flavors | 0.2-0.4 | 0.25-0.35 | 0.31 |
| Aspartame | 0 | 0 | 0 |
| Acesulfame Potassium | 0 | 0 | 0 |
| Soluble Coffee Solids | 0.05-0.50 | 0.10-0.35 | 0.14 |
| Dimethylpolysiloxane | 0.0000-0.0010 | 0.00030-0.00090 | 0.00078 |
| Sucrose | 6.0-11.0 | 8-10.5 | 10.0 |
| Carbonation level | 1.5 - 4.0 volumes | 2.0 - 3.5 volumes | 3.0 volumes |

Table 2 lists the preferred ingredients of a mid calorie coffee cola beverage and the ranges in which they may be present, the preferred ranges in which they may be present, and the most preferred amount in which they may be present.

**Table 2: Mid-Calorie Coffee Cola Beverage**

| **Ingredients** | **% w/v** **Preferred range** | **% w/v** **More Preferred range** | **% w/v** **Most preferred embodiment** |
|---|---|---|---|
| Potassium Sorbate | 0.000-0.050 | 0.000 - 0.032 | 0.032 |
| Sodium Benzoate | 0.000-0.040 | 0.000 - 0.017 | 0.017 |
| Caramel Color, Phosphoric Acid, Caffeine, Natural Flavors | 0.2-0.4 | 0.25-0.35 | 0.31 |
| Aspartame | 0.005 - 0.025 | 0.006 - 0.015 | 0.0074 |
| Acesulfame Potassium | 0.005 - 0.025 | 0.006 - 0.015 | 0.0074 |
| Soluble Coffee Solids | 0.05 - 0.50 | 0.10 - 0.35 | 0.14 |
| Dimethylpolysiloxane | 0.0000-0.0010 | 0.00030-0.00090 | 0.00078 |
| Sucrose | 2.0 - 6.0 | 3.5 - 5.5 | 4.78 |
| Carbonation level | 1.5 - 4.0 volumes | 2.0 - 3.5 volumes | 3.0 volumes |

Table 3 lists the preferred ingredients of the zero or near zero calorie coffee cola beverage and the ranges in which they may be present, the preferred ranges in which they may be present, and the most preferred amount in which they may be present.

**Table 3: No Calorie Coffee Cola Beverage**

| **Ingredients** | **%w/v** **Preferred range** | **%w/v** **More Preferred range** | **%w/v** **Most preferred embodiment** |
|---|---|---|---|
| Potassium Sorbate | 0.000-0.050 | 0.000 - 0.032 | 0.032 |
| Sodium Benzoate | 0.000-0.040 | 0.000 - 0.017 | 0.017 |
| Caramel Color, Phosphoric Acid, Caffeine, Natural Flavors | 0.2-0.4 | 0.25-0.35 | 0.31 |
| Aspartame | 0.010 - 0.035 | 0.018 - 0.024 | 0.0210 |
| Acesulfame Potassium | 0.005 - 0.030 | 0.010 - 0.017 | 0.0140 |
| Soluble Coffee Solids | 0.05 - 0.50 | 0.10 - 0.35 | 0.14 |
| Dimethylpolysiloxane | 0.0000-0.0010 | 0.00030-0.00090 | 0.00078 |
| Sucrose | 0 | 0 | 0 |
| Carbonation level | 1.5 - 4.0 volumes | 2.0 - 3.5 volumes | 3.0 volumes |

Each of Tables 1, 2 and 3 above list caffeine among the traditional cola elements. The total amount of caffeine may be adjusted between 0.0100% w/v and 0.0300% w/v. The sources of such caffeine can be added separately, can come from the coffee solids alone, or a combination of both.

The following examples set forth exemplary formulations of coffee colas.

### Example 1 (not within the scope of the invention)

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.00 |
| Acesulfame Potassium | 0.00 |
| Soluble Coffee Solids | 0.3 |
| Dimethylpolysiloxane | 0.00078 |
| Sucrose | 10.4 |
| Carbonation level | 3.8 volumes |

This product was prepared by adding 0.3 % w/v powdered coffee on top of a full sugar (10.4 Brix, i.e., 10.4%w/v), fully carbonated (3.8 volumes) cola beverage. This product demonstrates pleasant coffee aroma, smooth mouthfeel, and delicious coffee cola taste.

### Example 2

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.0074 |
| Acesulfame Potassium | 0.0074 |
| Soluble Coffee Solids | 0.29 |
| Dimethylpolysiloxane | 0.00078 |
| Sucrose | 4.78 |
| Carbonation level | 3.0 volumes |

This product was be prepared by adding 0.29% w/v powdered coffee to a cola formulation in which the sucrose content was decreased by more than half relative to Example 1 and a mixture of the artificial sweeteners Aspartame and Acesulfame Potassium was used to make up for the loss in sweetness. This product demonstrates pleasant coffee aroma, smooth mouthfeel, satisfactory foaming characteristics, and delicious coffee cola taste.

### Example 3 (not within the scope of the invention)

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.021 |
| Acesulfame Potassium | 0.014 |
| Soluble Coffee Solids | 0.29 |
| Dimethylpolysiloxane | 0.00078 |
| Sucrose | 0 |
| Carbonation level | 3.0 volumes |

This product may be prepared by adding 0.29% w/v powdered coffee to a cola formulation having no sucrose and only artificial sweeteners Aspartame and Acesulfame Potassium. This product also demonstrates pleasant coffee aroma, smooth mouthfeel, satisfactory foaming characteristics, and delicious coffee cola taste.

### Example 4

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.0074 |
| Acesulfame Potassium | 0.0074 |
| Soluble Coffee Solids | 0.14 |
| Dimethylpolysiloxane | 0.00078 |
| Sucrose | 4.78 |
| Carbonation level | 3.0 volumes |

This product was prepared by adding 0.14% w/v powdered coffee to a cola formulation in which the sucrose content was decreased by more than half relative to Example 1 and a mixture of the artificial sweeteners Aspartame and Acesulfame Potassium was used to make up for the loss in sweetness. This product demonstrates pleasant coffee aroma, smooth mouthfeel, satisfactory foaming characteristics, and delicious coffee cola taste.

### Example 5 (not within the scope of the invention)

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.021 |
| Acesulfame Potassium | 0.014 |
| Soluble Coffee Solids | 0.14 |
| Dimethylpolysiloxane | 0.00078 |
| Sucrose | 0 |
| Carbonation level | 3.0 volumes |

This product was prepared by adding 0.14% w/v powdered coffee to a cola formulation having no sucrose and only artificial sweeteners Aspartame and Acesulfame Potassium. This product also demonstrates pleasant coffee aroma, smooth mouthfeel, satisfactory foaming characteristics, and delicious coffee cola taste.
The foregoing examples are not intended to limit the invention, but are instead intended to merely exemplify particular embodiments within the scope of the invention as defined by the claims. The claims are intended to be construed according to their ordinary meaning, and nothing in this specification is intended to prescribe a narrower meaning to any claim term.

## Claims

1. A composition comprising
a carbonated cola beverage;
soluble coffee solids in an amount equal to or greater than 0.05% and no greater than 0.50% w/v;
sucrose in an amount equal to or greater than 2.0% w/v and no greater than 6.0% w/v;
Aspartame in an amount equal to or greater than 0.006% w/v and no greater than 0.015% w/v; and
Acesulfame Potassium in an amount equal to or greater than 0.006% w/v and no greater than 0.015% w/v.

2. A composition according to claim 1 wherein said soluble coffee solids are present in an amount equal to or greater than 0.10% and no greater than 0.35% w/v.

3. A composition according to claim 1 wherein said soluble coffee solids are present in an amount equal to 0.14% w/v.

4. A composition according to claim 1, wherein said sucrose is present in an amount equal to or greater than 3.5% w/v and no greater than 5.5% w/v.

5. A composition according to claim 4 wherein said sucrose is present in an amount equal to 4.78% w/v.

6. A composition according to claim 1 comprising Aspartame in an amount equal to 0.0074% w/v and Acesulfame Potassium in an amount equal to 0.0074% w/v.

7. A composition according to any preceding claim wherein said coffee solids have been added in the form of powdered coffee solids.

## Patentansprüche

1. Eine Zusammensetzung, enthaltend
ein mit Kohlensäure versetztes Cola-Getränk,
lösliche Kaffee-Feststoffe in einer Menge entsprechend oder größer als 0,05% und nicht größer als 0,50% Gew./Vol.,
Saccharose in einer Menge entsprechend oder größer als 2,0% Gew./Vol. und nicht größer als 6,0% Gew./Vol.,
Aspartam in einer Menge entsprechend oder größer als 0,006% Gew.Nol. und nicht größer als 0,015% Gew./Vol. und
Acesulfam-Kalium in einer Menge entsprechend oder größer als 0,006% Gew./Vol. und nicht größer als 0,015% Gew./Vol.

2. Eine Zusammensetzung gemäß Anspruch 1, wobei die löslichen Kaffee-Feststoffe in einer Menge entsprechend oder größer als 0,10% und nicht größer als 0,35% Gew./Vol. vorliegen.

3. Eine Zusammensetzung gemäß Anspruch 1, wobei die löslichen Kaffee-Feststoffe in einer Menge entsprechend 0,14% Gew./Vol. vorliegen.

4. Eine Zusammensetzung gemäß Anspruch 1, wobei die Saccharose in einer Menge entsprechend oder größer als 3,5% Gew./Vol. und nicht größer als 5,5% Gew./Vol. vorliegt.

5. Eine Zusammensetzung gemäß Anspruch 4, wobei die Saccharose in einer Menge entsprechend 4,78% Gew./Vol. vorliegt..

6. Eine Zusammensetzung gemäß Anspruch 1, die Aspartam in einer Menge entsprechend 0,0074% Gew./Vol. und Acesulfam-Kalium in einer Menge entsprechend 0,0074% Gew./Vol. enthält.

7. Eine Zusammensetzung gemäß irgendeinem vorhergehenden Anspruch, wobei die Kaffee-Feststoffe in Form von pulverförmigen Kaffee-Feststoffen zugegeben wurden.

## Revendications

1. Composition comprenant
une boisson carbonatée au cola ;
des matières solides solubles du café dans une quantité égale ou supérieure à 0,05 % et ne dépassant pas 0,50 % p/v ;
du saccharose dans une quantité égale ou supérieure à 2,0 % p/v et ne dépassant pas 6,0 % p/v ;
de l'aspartame dans une quantité égale ou supérieure à 0,006 % p/v et ne dépassant pas 0,015 % p/v ; et
de l'acésulfame de potassium dans une quantité égale ou supérieure à 0,006 % p/v et ne dépassant pas 0,015 % p/v.

2. Composition selon la revendication 1, **caractérisée en ce que** lesdites matières solides solubles du café existent dans une quantité égale ou supérieure à 0,10 % et ne dépassant pas 0,35 % p/v.

3. Composition selon la revendication 1, **caractérisée en ce que** lesdites matières solides solubles du café existent dans une quantité égale à 0,14 % p/v.

4. Composition selon la revendication 1, **caractérisée en ce que** ledit saccharose existe dans une quantité égale ou supérieure à 3,5 % p/v et ne dépassant pas 5,5 % p/v.

5. Composition selon la revendication 4, **caractérisée en ce que** ledit saccharose existe dans une quantité égale à 4,78 % p/v.

6. Composition selon la revendication 1, comprenant de l'aspartame dans une quantité égale à 0,0074 % p/v et de l'acésulfame de potassium dans une quantité égale à 0,0074 % p/v.

7. Composition selon l'une quelconque des revendications précédentes, **caractérisée en ce que** lesdites matières solides du café ont été ajoutées sous forme de matières solides de café en poudre.
